# EUROPÄISCHE PATENTANMELDUNG

(11) **EP 1 184 269 A2**
(43) Veröffentlichungstag der Anmeldung: **06.03.2002**
(21) Anmeldenummer: 01116978.6
(22) Anmeldetag: 12.07.2001
(51) Int. Cl.: B62D 33/067

(54) **Vordere Lageranordnung für ein kippbares Fahrerhaus eines Lastkraftwagens**

(30) Priorität: 01.09.2000 DE 10043048
(71) Anmelder: Mannesmann Boge GmbH, 53175 Bonn-Bad Godesberg (DE)
(72) Erfinder: Testroet, Martin, 53757 Sankt Augustin (DE); Steinhöfer, Ralf, 53639 Königswinter (DE)

(57) **Zusammenfassung**

Vordere Lageranordnung für ein kippbares Fahrerhaus eines Lastkraftwagens, mit wenigstens zwei am Fahrzeugrahmen befestigten Konsolen, an denen das Fahrerhaus vorn über auf zueinander fluchtenden Lagerachsen angeordnete elastische Lager abgestützt ist, die in am Fahrerhaus-Boden befestigten Lagerschalen aufgenommen sind, mit ein Lager (1) das aus einem Gummilager (2) und einem koaxial dazu angeordneten Gleitlager (3) besteht.

## Beschreibung

Die Erfindung bezieht sich auf eine vordere Lageranordnung für ein kippbares Fahrerhaus eines Lastkraftwagens, mit wenigstens zwei am Fahrzeugrahmen befestigten Konsolen, an denen das Fahrerhaus vorn über auf zueinander fluchtenden Lagerachsen angeordnete elastische Lager abgestützt ist, die in am Fahrerhaus-Boden befestigten Lagerschalen aufgenommen sind.

Es sind bereits Lageranordnungen für kippbare Fahrerhäuser von Lastkraftwagen bekannt (z.B. DE 195 37 722 A1, EP 0.635.419 B1). Derartige Lageranordnungen sind in Lastkraftwagen realisiert. Einer solchen Lageranordnung liegen folgende Probleme zugrunde, um ein zufriedenstellenden Fahrkomfort zu erzielen, müssen die Fahrerhaus-Lager möglichst große Wege zulassen, diese werden über die Ausgestaltung und das Material der elastischen Lager vorgegeben. Relativ weiche elastische Lager, welche relativ große Federwege ermöglichen, erweisen sich aber beim Kippen des Fahrerhauses als nachteilig.

Bei der Lagerung von kippbaren LKW-Fahrerhäusern treten in der vorderen Lagerstelle grundsätzlich Belastungen bzw. Funktionsüberlagerungen auf. Im Fahrbetrieb treten Verdrehbelastungen von ca. +/- 10 Grad mit überlagerten Radial- und Axialbelastungen auf. Im Bedarfsfall muß über dieselbe Lagerstelle aber auch das Kippen des Führerhauses realisiert werden, wobei eine Verdrehbelastung von ca. 70 Grad aufgenommen werden muß. Außerdem treten kardanische Belastungen auf.

Reine Gleitlager haben sich an dieser Einbaustelle als nicht lebensdauerfest erwiesen, da die ständig wechselnde Belastung in einem relativ kleinen und immer gleichen Bereich des Lagers (Punktlast), selbst bei gefetteten Lagerausführungen zu frühzeitigem Verschleiß führt. Desweiteren sind Gleitlager durch enge Fertigungstoleranzen aufwendig und kostenintensiv gestaltet und weisen keinerlei Dämpfungseigenschaften auf. Durch die fehlende Elastizität der Gleitlager treten bei kardanischer Belastung darüber hinaus hohe Kantenpressungen auf.

Es ist daher Aufgabe der Erfindung, eine vordere Lageranordnung für ein kippbares Fahrerhaus derart auszubilden, daß die elastischen Lager auf eine komfortable Federung des Fahrerhauses ausgelegt sind, wobei darüber hinaus ein Kippen des Fahrerhauses ohne Probleme ausgeführt werden kann.

Zur Lösung dieser Aufgabe ist erfindungsgemäß vorgesehen, daß das Lager aus einem Gummilager und einem koaxial dazu angeordneten Gleitlager besteht. Hierbei ist von Vorteil, daß die von Kunden geforderten Komfortansprüche im Fahrbetrieb, die gewünschten Dauerhaltbarkeitsansprüche (Fahrzeuglebensdauer) sowie den gleichzeitig erforderlichen Verdreheigenschaften beim Kippen des Fahrerhauses Rechnung getragen wird, indem die vordere Lageranordnung aus einer Kombination aus Molekular- und Gleitlager besteht.

Desweiteren ist von Vorteil, daß die herausragende Eigenschaft dieser Lagervariante sich durch eine Funktionstrennung von Fahr- und Kippbetrieb auszeichnet. Im Fahrbetrieb werden durch die Verwendung eines Gummilagers die Kundenforderungen nach Wartungsfreiheit, Dauerhaltbarkeit, Wirtschaftlichkeit und Fahrkomfort im höchsten Maße erfüllt, während im Kippbetrieb die Verdrehbewegungen von ca. 70 Grad ausschließlich vom Gleitlager aufgenommen werden können, das nur in diesem Falle der geforderten Lastspielzahl von 1500 Kippvorgängen standhalten muß.

Nach einem weiteren wesentlichen Merkmal ist vorgesehen, daß das Gummilager auf der Lagerachse und das Gleitlager radial außen zwischen dem Gummilager und der Lagerschale angeordnet ist. Durch eine derartige Funktionsteilung kann sowohl das Gummilager als auch das Gleitlager auf die entsprechenden Mindestanforderungen kostengünstig ausgelegt werden.

Nach einem weiteren wesentlichen Merkmal ist vorgesehen, daß das Gleitlager über eine Arretiervorrichtung gegen Verdrehung gesichert ist. Durch eine derartige Arretiervorrichtung läßt sich im Fahrbetrieb das Gleitlager sozusagen ausschalten.

Darüber hinaus ist vorgesehen, daß die Arretiervorrichtung vorgespannt ist und oberhalb einer vorgegebenen Kraft eine Drehung des Gleitlagers zuläßt oder daß als Arretiervorrichtung das Gleitlager mit mindestens einer Ausnehmung am Außenumfang versehen ist, in die ein federbelastetes Element eingreift. Mit Vorteil ist dabei als Element eine Kugel vorgesehen.

Eine derartige Arretiervorrichtung, welche über federbelastete Elemente am äußeren Umfang des Außenteiles des Gummilagers formschlüssig einrasten, wird das außenliegende Gleitlager ausgeschaltet. Während des Fahrbetriebes befinden sich die federbelasteten Elemente im arretierten Zustand und übertragen somit sämtliche bis zu einem definierten Verdrehwinkel eingeleitete Verdrehbewegungen formschlüssig auf das Gummilager. Die Hauptbelastungen im Fahrbetrieb, nämlich die Verdrehbelastungen von ca. +/- 10 Grad mit überlagerten Radial- und Axialbelastungen, ebenso wie die zulässigen Fertigungstoleranzen werden vom wartungsfreien Gummilager aufgenommen.

Größere Verdrehwinkel, hervorgerufen durch das Kippen des Fahrerhauses, führen zum Ausrasten der federnden Elemente aus ihrer Ausnehmung und somit zum Einschalten des Gleitlagers. Das Gummilager ist ab diesem Moment frei von Verdrehbelastungen, die federbelasteten Elemente gleiten nun über den Umfang des Lageraußenteiles. Die nachfolgende Verdrehbewegung wird dann ausschließlich von einem wartungsfreien Gleitlager, mit einer Gleitschicht, z.B. bestehend aus einer PTFE-Komponente (ohne Schmierung) übernommen. Somit wird das Gleitlager ausschließlich beim Kippen des Fahrerhauses und nicht im Fahrbetrieb belastet, so daß Lebensdauerprobleme in diesem Bereich ausgeschlossen werden können.

Nach einer weiteren Ausgestaltung ist vorgesehen, daß die Kugel zusammen mit einer Druckfeder in einer Bohrung eines Einschraubteiles angeordnet ist.

Nach einer günstigen Ausführungsform ist vorgesehen, daß das Gummilager aus einer Innenbuchse und einer Außenbuchse mit einem dazwischen angeordneten Gummielement besteht. Derartige Gummilager sind ohne weiteres als Standardbauteile einsetzbar, lediglich eine Abstimmung der Durchmesserverhältnisse der beiden Lager zueinander wird problemlos möglich sein.

Nach einer weiteren Ausgestaltung ist vorgesehen, daß das Gummilager und das Gleitlager in einer Bohrung der Lagerschale über mindestens einen Sicherungsring fixiert ist.

Bevorzugte Ausführungsbeispiele der Erfindung sind in den Zeichnungen schematisch dargestellt.

Es zeigt:
Figur 1 eine Lageranordnung im Schnitt
Figur 2 die in Figur 1 dargestellte Lagerungsanordnung als Seitenansicht
Figur 3 eine weitere Ausführungsform einer Lageranordnung im Schnitt.

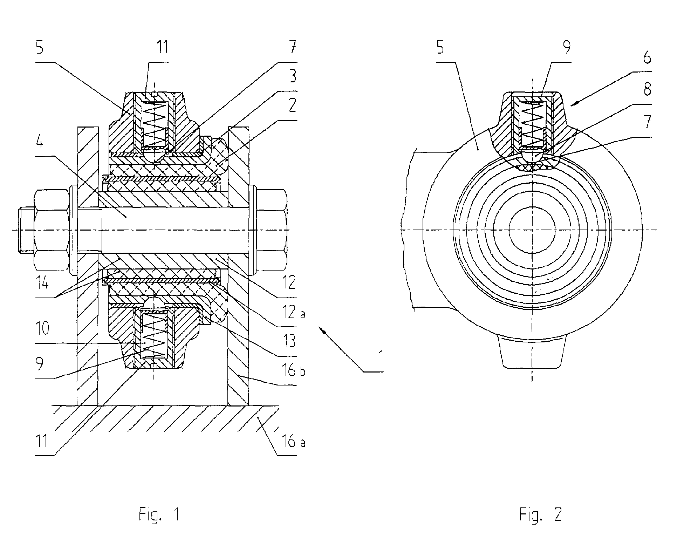

Die in den Figuren 1 und 2 dargestellte vordere Lageranordnung für ein kippbares Fahrerhaus eines Lastkraftwagens besteht im wesentlichen aus der Lagerkonsole 16a und 16b, der Lagerachse 4 auf der das Lager 1 aufgenommen ist, die Lagerschale 5 ist dabei in nicht dargestellter Weise mit dem Fahrerhaus eines Lastkraftwagens verbunden.

Das eigentliche Lager 1 besteht aus einem Gummilager 2 und einem Gleitlager 3 und einer zusätzlichen Arretiervorrichtung 6. Das radial innen angeordnete Gummilager 2 ist auf der Lagerachse 4 aufgenommen, mit einer Innenbuchse 12, einer Außenbuchse 13 sowie einem dazwischen angeordneten Gummiteil 14. Radial außerhalb des Gummilagers 2 befindet sich das Gleitlager 3, welches eine Ausnehmung 7 aufweist durch die eine Kugel 8 einen Formschluß mit der Außenbuchse 13 des Gummilagers 2 herstellt.

Die Arretiervorrichtung 6 besteht dabei aus einem Einschraubteil 11 in dem nicht nur die Kugel 8, sondern eine Feder 9 in der Bohrung 10 angeordnet sind, so daß oberhalb einer bestimmten Drehbewegung des Fahrerhauses die Kugel 8 gegen die Feder 9 den Formschluß aufhebt und anschließend eine Drehbewegung des Gleitlagers 3 gegenüber dem Gummilager 2 zuläßt. Das Gummilager 2 führt gegenüber der Lagerachse 4 nur unwesentliche Drehbewegungen aus.

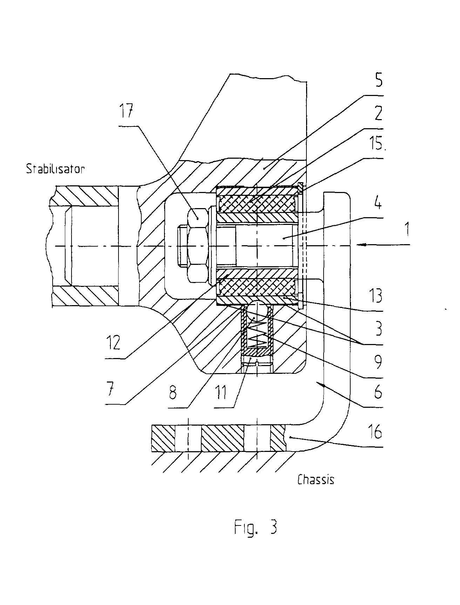

Aus der Figur 3 ist eine weitere Ausführungsform zu entnehmen, bei der die Lagerkonsole 16, welche mit dem Chassis des Lastkraftwagens verbunden ist gleichzeitig noch die Lagerachse 4 aufweist, während die Lagerschale 5 mit dem Fahrerhaus in Verbindung steht. Auf der Lagerachse 4 ist das Gummilager 2 angeordnet und radial außerhalb des Gummilagers 2 befindet sich das Gleitlager 3. Das gesamte Lager 1 ist über eine Sicherungsmutter 17 auf der Lagerachse 4 befestigt, während das Lager 1 in der Lagerschale 5 mittels eines Sicherungsringes 15 gehalten ist.

Auch bei dieser Ausführungsform wird eine Arretiervorrichtung 6 verwendet, bestehend aus einem Einschraubteil 11, einer Feder 9 sowie einem federbelasteten Element in Form einer Kugel 8. Die Kugel 8 greift durch eine Ausnehmung 7 des Gleitlagers hindurch in die Außenbuchse 13 des Gummilagers 2 und stellt einen Formschluß sicher.

Größere Verdrehwinkel, hervorgerufen durch das Kippen des Fahrerhauses, führen zum Ausrasten der Kugel 8 aus der Außenbuchse 13, damit ist das Gummilager 2 ab diesem Moment frei von Verdrehbelastungen und das Gleitlager tritt in seine Funktion ein. Die Kugeln gleiten beim Kippen des Fahrerhauses über den Umfang der Außenbüchse 13, so daß die Verdrehbewegung nur noch durch das wartungsfreie Gleitlager 3 erfüllt wird.

### Bezugszeichenliste

- 1 -: Lager
- 2 -: Gummilager
- 3 -: Gleitlager
- 4 -: Lagerachse
- 5 -: Lagerschale
- 6 -: Arretiervorrichtung
- 7 -: Ausnehmung
- 8 -: Kugel
- 9 -: Feder
- 10 -: Bohrung
- 11 -: Einschraubteil
- 12 -: Innenbuchse
- 13 -: Außenbuchse
- 14 -: Gummiteil
- 15 -: Sicherungsring
- 16 -: Lagerkonsole
- 17 -: Sicherungsmutter

## Patentansprüche

1. Vordere Lageranordnung für ein kippbares Fahrerhaus eines Lastkraftwagens, mit wenigstens zwei am Fahrzeugrahmen befestigten Konsolen, an denen das Fahrerhaus vorn über auf zueinander fluchtenden Lagerachsen angeordnete elastische Lager abgestützt ist, die in am Fahrerhaus-Boden befestigten Lagerschalen aufgenommen sind,
**dadurch gekennzeichnet,**
**daß** das Lager (1) aus einem Gummilager (2) und einem koaxial dazu angeordneten Gleitlager (3) besteht.

2. Lageranordnung nach Anspruch 1,
**dadurch gekennzeichnet,**
**daß** das Gummilager (2) auf der Lagerachse (4) und das Gleitlager (3) radial außen zwischen dem Gummilager (2) und der Lagerschale (5) angeordnet ist.

3. Lageranordnung nach Anspruch 1,
**dadurch gekennzeichnet,**
**daß** das Gleitlager (3) über eine Arretiervorrichtung (6) gegen Verdrehung gesichert ist.

4. Lageranordnung nach Anspruch 3,
**dadurch gekennzeichnet,**
**daß** die Arretiervorrichtung (6) vorgespannt ist und oberhalb einer vorgegebenen Kraft eine Drehung des Gleitlagers (3) zuläßt.

5. Lageranordnung nach Anspruch 3,
**dadurch gekennzeichnet,**
**daß** als Arretiervorrichung (6) das Gleitlager (3) mit mindestens einer Ausnehmung (7) am Außenumfang versehen ist, in die ein federbelastetes Element eingreift.

6. Lageranordnung nach Anspruch 5,
**dadurch gekennzeichnet,**
**daß** als Element eine Kugel (8) vorgesehen ist.

7. Lageranordnung nach Anspruch 6,
**dadurch gekennzeichnet,**
**daß** die Kugel (8) zusammen mit einer Druckfeder (9) in einer Bohrung (10) eines Einschraubteiles (11) angeordnet ist.

8. Lageranordnung nach Anspruch 1,
**dadurch gekennzeichnet,**
**daß** das Gummilager (2) aus einer Innenbuchse (12) und einer Außenbuchse (13) mit einem dazwischen angeordneten Gummielement (14) besteht.

9. Lageranordnung nach Anspruch 1,
**dadurch gekennzeichnet,**
**daß** das Gummilager (2) und das Gleitlager (3) in einer Bohrung der Lagerschale (5) über mindestens einen Sicherungsring (15) fixiert ist.
